# EUROPÄISCHE PATENTSCHRIFT

(11) **EP 1 295 045 B1**
(45) Veröffentlichungstag und Bekanntmachung des Hinweises auf die Patenterteilung: **18.02.2004**
(21) Anmeldenummer: 01942868.9
(22) Anmeldetag: 25.06.2001
(51) Int. Cl.: F16B 5/00

(54) **KOMBINATION VON ZWEI PLATTEN MIT EINER VORRICHTUNG ZUM VERBINDEN DIESER PLATTEN, INSBESONDERE ARBEITSPLATTEN**
COMBINATION OF TWO SHEETS WITH A DEVICE FOR CONNECTING THESE SHEETS, IN PARTICULAR WORK SHEETS
COMBINAISON DE DEUX PLAQUES AVEC UN DISPOSITIF SERVANT A RELIER CES PLAQUES, NOTAMMENT DES PLAQUES DE PLAN DE TRAVAIL

(30) Priorität: 27.06.2000 AT 10992000
(43) Veröffentlichungstag der Anmeldung: 26.03.2003
(73) Patentinhaber: M. Kaindl, 5071 Wals (AT)
(72) Erfinder: KNAUSEDER, Franz, A-5020 Salzburg (AT)
(74) Vertreter: Wildhack, Helmut, Dipl.-Ing. Dr.
(86) Internationale Anmeldenummer: PCT/AT2001/000202
(87) Internationale Veröffentlichungsnummer: WO 2002/001084

(56) Entgegenhaltungen:
- DE-A- 2 023 016
- DE-A- 4 133 520
- DE-U- 29 504 622
- FR-A- 2 180 139
- GB-A- 152 834
- US-A- 5 934 819

## Beschreibung

Die Erfindung betrifft eine Kombination von Platten und einer Vorrichtung gemäß dem Oberbegriff des Anspruches 1.

Insbesondere bei Küchenarbeitsplatten ist es, vor allem an jenen Stellen, wo in einer Raumecke diese Platten senkrecht zueinander verlaufen oder in einem Winkel, z.B. von 45°, zusammenstoßen, aber auch an anderen Stellen, wo zwei Platten aneinander stoßen, erforderlich, dass diese Platten an ihrer Oberseite in einer gemeinsamen Ebene liegen, so dass keine störende Stufe entsteht, wobei sich bereits Unterschiede im Bereich von zehntel Millimetern spürend bemerkbar machen. Bisher wurden die Platten an ihren einander berührenden Stirnseiten miteinander verleimt und zusätzlich noch über individuell zu erstellende, an der Plattenunterseite befestigte Hilfskonstruktionen in ihrer richtigen Lage gehalten. Die Montage der Platten ist somit kompliziert und erfordert ein Fachpersonal, ist also für Heimwerker kaum anwendbar.

Aus der AT 392 333 B ist eine Vorrichtung zum Verbinden zweier Platten über an der Plattenunterseite in einer Ausnehmung befestigte Beschlagteile bekannt geworden. Bei dieser Vorrichtung ist in einer Gewindebohrung eines beweglichen Schiebers des einen Beschlagteiles eine Spannschraube vorgesehen, die sich mit einer konischen Spitze an einer Schrägfläche des anderen Beschlagteiles abstützt. Durch Verdrehen der Spannschraube gleitet die konische Spitze entlang der Schrägfläche und bewirkt so ein Zusammenpressen der einander berührenden Stirnseiten der Platten. Zur Höhenverstellung der Platten relativ zueinander ist in einem der beiden Beschlagteile eine Verstellschraube vorgesehen, deren Schraubenkopf sich an einer Wand des anderen Beschlagteiles abstützt. Eine solche Vorrichtung ist sehr kompliziert in ihrem Aufbau und es ist weiters, da die Spannschraube mit ihrer konischen Spitze entlang einer Schrägfläche gleitet und daher durch die Spannschraube allein keine definierte Lage der beiden Platten senkrecht zur Plattenebene gewährleistet ist, unbedingt eine weitere Einrichtung für die Verstellung der Platten senkrecht zur Plattenebene erforderlich.

Aus der DE-U 29504622 ist ein Verbindungsbeschlag zum lösbaren Verbinden zweier, vorzugsweise rechtwinkelig aufeinanderstoßender Möbelteile, bestehend aus einem in eine Aussparung des einen Möbelteils einsetzbaren Gehäuse mit einem drehbar in diesem gehalterten Verankerungsteil für einen von diesem hintergreifbaren Kopf eines mit dem anderen Möbelteil verschraubbaren Bolzens bekannt. Dabei ist vorgesehen, dass das Verankerungsteil aus einem mit einem radialen Betätigungshebel versehenen zylindrischen Schaftteil besteht, der an einer Stirnseite mit einer radialen, an einem Ende geschlossenen und einen Hinterschnitt aufweisenden Nut versehen ist, dass das Schaftteil in einer Querbohrung des Gehäuses gelagert ist und der Abschnitt mit der Nut in einer Aussparung des Gehäuses liegt, die zu der Stirnseite und der Oberseite des Gehäuses hin offen ist, und dass der radiale Betätigungshebel eine nutförmige Ausnehmung in der Oberseite des Gehäuses durchsetzt und zwischen seinen Endlagen verschwenkbar ist, in deren einer die offene Seite der Nut zur offenen Seite und in deren anderen Endlage diese zu einem Teil der Wand der Aussparung weist.

Die vorliegende Erfindung hat sich zur Aufgabe gestellt, eine Vorrichtung der eingangs beschriebenen Art zu schaffen, die äußerst einfach in ihrem Aufbau ist und daher kostengünstig hergestellt werden kann, und die es auch Laien gestattet, eine Verbindung zweier an ihren Stirnseiten einander berührender Platten derart herzustellen, dass die Oberseiten der Platten in einer gemeinsamen Ebene liegen. Zur Lösung dieser Aufgabe schlägt die Erfindung die Merkmale des Kennzeichens des Anspruches 1 vor.

Bei der Montage ist es lediglich notwendig, die beiden Beschlagteile an der Unterseite der beiden Platten, vorzugsweise in einer Vertiefung, zu befestigen, die Platte mit dem die Schraube aufweisenden Beschlagteil zu positionieren und dann die andere Platte derart abzusenken, dass der Schraubenschaft in den zur Plattenunterseite zu offenen Schlitz eindringt und sich der Schraubenkopf in der Ausnehmung befindet. Im einfachsten Fall kann dann durch eine weitere Person eine Ausrichtung der beiden Platten derart erfolgen, dass die Plattenoberseiten in einer gemeinsamen Ebene liegen, worauf durch Verdrehen der Schraube die einander berührenden Stirnseiten der Platten aneinander gepreßt und damit die Platten in ihrer Lage fixiert werden.

Um seitlich die gegenseitige Lage der beiden Beschlagteile sicherzustellen, kann erfindungsgemäß der zweite Beschlagteil mit den ersten Beschlagteil an seinen quer zur den Schlitz aufnehmenden Begrenzungswand verlaufenden Seitenwänden mit Spiel umfassenden Ansätzen versehen sein, wobei durch das Spiel noch eine gewisse seitliche Verschiebung ermöglicht wird.

Um eine sehr genaue Ausrichtung der beiden Platten sicherzustellen, derart, dass die Plattenoberseiten in einer gemeinsamen Ebene liegen, sind gemäß einer bevorzugten Ausführungsform der Erfindung in den Ansätzen Justierschrauben od.dgl. vorgesehen, die sich an einer parallel zur Oberseite der Platten verlaufenden Grundplatte des ersten Beschlagteiles abstützen. Durch Verdrehen dieser Justierschrauben wird eine zehntel Millimeter genaue Ausrichtung der Oberseiten der Platten an der Verbindungsstelle ermöglicht, so dass diese Oberseiten exakt in einer gemeinsamen Ebene liegen.

Vorzugsweise ist der Schraubenkopf der in die Gewindebohrung des zweiten Beschlagteiles einschraubbaren Schraube polygonal ausgebildet und es ist die Länge der den Schlitz aufweisenden Begrenzungswand der Ausnehmung größer als die Breite des Schraubenkopfes, so dass ein für die Verdrehung der Schraube bzw. des Schraubenkopfes erforderlicher Schraubenschlüssel in diese Ausnehmung eingeführt werden kann.

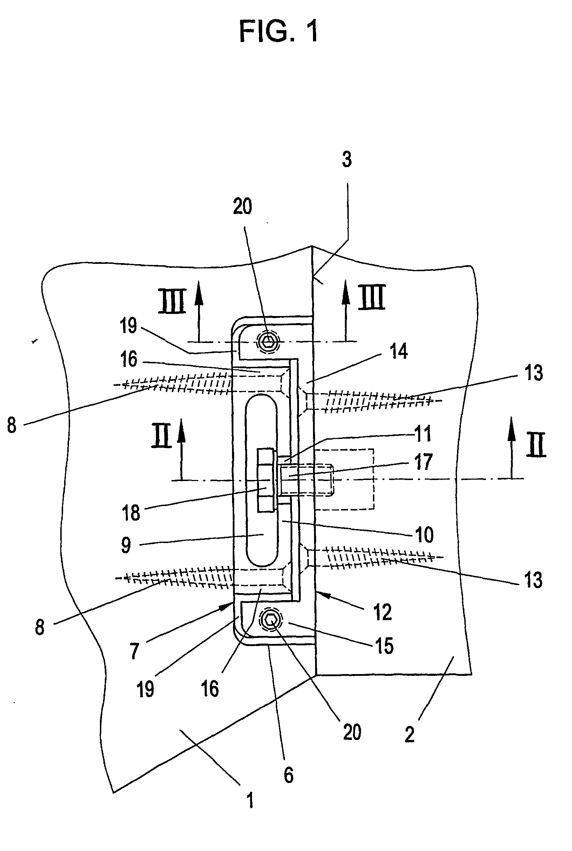

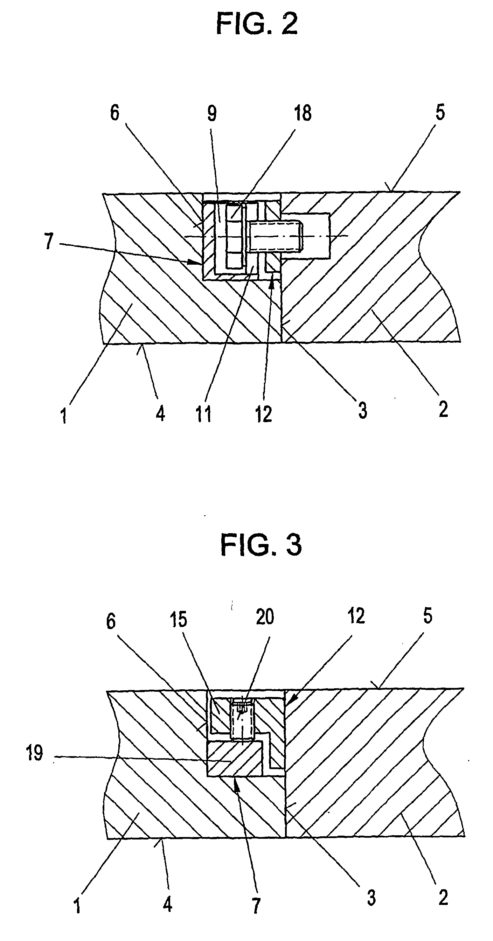

In der Zeichnung ist die Erfindung anhand eines Ausführungsbeispieles schematisch veranschaulicht. Fig. 1 zeigt eine Draufsicht auf die in einer Vertiefung an der Unterseite einer Platte eingesetzte erfindungsgemäße Vorrichtung. Fig. 2 stellt einen Schnitt nach der Linie II-II und Fig. 3 einen Schnitt nach der Linie III-III in Fig. 1 dar.

Die Vorrichtung dient zur Verbindung zweier Platten 1, 2, deren Stirnseiten 3 einander berühren und deren Oberseiten 4 in einer Ebene liegen.

Die Unterseite 5 der Platte 1 ist im Bereich der Stirnseite 3 mit einer Vertiefung 6 versehen, die einen ersten Beschlagteil 7 aufnimmt, welcher über Schrauben 8 an der Platte 1 befestigt ist. Dieser erste Beschlagteil 7 ist mit einer nach unten offenen Ausnehmung 9 versehen, deren der Platte 2 zugewendete Begrenzungswand 10 einen nach unten offenen Schlitz 11 aufweist.

Der mit der Platte 2 verbundene zweite Beschlagteil 12 besteht aus einer an der Stirnseite 3 der Platte 2 mittels Schrauben 13 befestigten Platte 14, die mit Ansätzen 15 versehen ist, welche die quer zur Begrenzungswand 10 des ersten Beschlagteiles 7 verlaufenden Seitenwände 16 mit Spiel umfassen. In einem Schraubgewinde der Platte 14 ist eine Arretierungsschraube 17 eingeschraubt, welche in den unten offenen Schlitz 11 eingeführt werden kann und deren als Sechskantkopf ausgebildeter Schraubenkopf 18 sich bei angezogener Schraube 17 an der Begrenzungswand 10 abstützt. Die Länge der den Schlitz 11 aufweisenden Begrenzungswand 10 ist hiebei so bemessen, dass der für die Verdrehung der Schraube 17 erforderliche Schraubenschlüssel in die Ausnehmung 9 eingeführt werden kann.

Der erste Beschlagteil 7 ist mit einer Grundplatte 19 versehen, die seitlich über die Seitenwände 16 vorsteht und an der sich die Ansätze 15 abstützen. Die Abstützung erfolgt hiebei über in Gewindebohrungen in den Ansätzen 15 einschraubbare Justierschrauben 20. Durch Verstellung dieser Justierschrauben kann eine exakte Einstellung der gegenseitigen Lage der Oberseite 4 der beiden Platten 1,2 erfolgen.

Die miteinander zu verbindenden Stirnseiten können mit der frontbildenden Kante von Küchenarbeitsplatten beliebige Winkel, z.B. 45° oder 90° einschließen.

## Patentansprüche

1. Kombination von zwei Platten mit einer Vorrichtung zum Verbinden dieser an ihrer Oberseite (4) in einer gemeinsamen Ebene liegender und an ihren Stirnseiten einander berührenden Platten, insbesondere Arbeitsplatten (1,2), wobei an einer der Platten (1) ein erster Beschlagteil (7) mit einer Ausnehmung (9) vorgesehen ist, die mit einem seitlichen Schlitz (11) für die Aufnahme einer von der anderen Platte (2) abstehenden Schraube (17) versehen ist, wobei der Außendurchmesser der Schraube (17) kleiner als die Breite des Schlitzes (11 ) und der in dieser Ausnehmung (9) angeordnete und sich an einer Begrenzungswand (10) der Ausnehmung (9) abstützende Kopf (18) der Schraube (17) größer als die Breite des Schlitzes (11) sind, **dadurch gekennzeichnet, dass** die im ersten Beschlagteil (7) vorgesehene Ausnehmung in Bezug auf die eine Platte (1) ortsfest und zu einer Plattenseite offen angeordnet ist, und dass in der anderen Platte (2) ein mit einer Gewindebohrung versehener Beschlagteil (12) befestigt ist, in welche die Schraube (17) einschraubbar ist.

2. Kombination nach Anspruch 1, **dadurch gekennzeichnet, dass** der zweite Beschlagteil (12) mit den ersten Beschlagteil (7) an seinen quer zur den Schlitz (11) aufweisenden Begrenzungswand (10) verlaufenden Seitenwänden (16) mit Spiel umfassenden Ansätzen (15) versehen ist.

3. Kombination nach Anspruch 2, **dadurch gekennzeichnet, dass** in den Ansätzen (15) Justierschrauben (20) od.dgl. vorgesehen sind, die sich an einer parallel zur Oberseite (4) der Platten (1,2) verlaufenden Grundplatte (19) des ersten Beschlagteiles (7) abstützen.

4. Kombination nach Anspruch 1, 2 oder 3, **dadurch gekennzeichnet, dass** der Schraubenkopf (18) der in die Gewindebohrung des zweiten Beschlagteiles (12) einschraubbaren Schraube (17) polygonal ausgebildet ist und dass die Abmessung der den Schlitz (11) aufweisenden Begrenzungswand (10) der Ausnehmung (9) quer zur Schraubenachse größer ist als die Breite des Schraubenkopfes (18).

5. Kombination nach einem der Ansprüche 1 bis 4, **dadurch gekennzeichnet, dass** der erste Beschlagteil (7) in einer Vertiefung (6) in der Unterseite einer der Platten (1) angeordnet ist.

## Claims

1. A combination of two panels with a device for joining the said panels, in particular worktop panels (1, 2), which are situated in a common plane on their top sides (4) and which touch each other on their end faces, wherein a first fitting part (7) with a recess (9) is provided on one of the panels (1), the recess (9) being provided with a lateral slot (11) for receiving a bolt (17) projecting from the other panel (2), wherein the external diameter of the bolt (17) is smaller than the width of the slot (11) and the head (18) of the bolt (17) arranged in the said recess (9) and supported on a boundary wall (10) of the recess (9) is larger than the width of the slot (11), **characterized in that** the recess provided in the first fitting part (7) is arranged so as to be stationary with respect to one panel (1) and open towards one side of the panel, and a fitting part (12) provided with a threaded bore into which the bolt (17) is capable of being screwed is fastened in the other panel (2).

2. A combination according to Claim 1, **characterized in that** the second fitting part (12) is provided with attachments (15) which embrace the first fitting part (7) with clearance at its lateral walls (16) extending transversely to the boundary wall (10) comprising the slot (11).

3. A combination according to Claim 2, **characterized in that** adjustment screws (20) or the like, which are supported on a base plate (19) of the first fitting part (7) extending parallel to the top side (4) of the panels (1, 2), are provided in the attachments (15).

4. A combination according to Claim 1, 2 or 3, **characterized in that** the head (18) of the bolt (17) capable of being screwed into the threaded bore of the second fitting part (12) is polygonal, and the dimension of the boundary wall (10) of the recess (9) comprising the slot (11), taken transversely to the axis of the bolt, is larger than the width of the bolt head (18).

5. A combination according to one of Claims 1 to 4, **characterized in that** the first fitting part (7) is arranged in a depression (6) in the underside of one of the panels (1).

## Revendications

1. Combinaison de deux panneaux avec un dispositif pour relier ces panneaux se situant dans un plan commun sur leur face supérieure (4) et en contact l'un avec l'autre sur leurs chants, en particulier plans de travail (1, 2), sur l'un des panneaux (1) étant prévue une première partie de ferrure (7) avec un évidement (9) qui est pourvu d'une fente latérale (11) destinée à recevoir une vis (17) dépassant de l'autre panneau (2), le diamètre extérieur de la vis (17) étant inférieur à la largeur de la fente (11) et la tête (18) de la vis (17), disposée dans cet évidement (9) et prenant appui contre une paroi de délimitation (10) de l'évidement (9), étant plus grande que la largeur de la fente (11), **caractérisée en ce que** l'évidement, prévu dans la première partie de ferrure (7), est disposé de manière fixe par rapport à l'un des panneaux (1) et ouvert vers une face du panneau, et **en ce que** dans l'autre panneau (2) est fixée une partie de ferrure (12) pourvue d'un trou taraudé, dans lequel on peut visser la vis (17).

2. Combinaison selon la revendication 1, **caractérisée en ce que** la deuxième partie de ferrure (12) est pourvue d'appendices (15) enserrant avec jeu la première partie de ferrure (7) sur ses parois latérales (16), s'étendant transversalement à la paroi de délimitation (10) présentant la fente (11).

3. Combinaison selon la revendication 2, **caractérisée en ce que** dans les appendices (15) sont prévues des vis d'ajustage (20) ou similaires qui prennent appui contre une plaque de base (19) de la première partie de ferrure (7), s'étendant parallèlement à la face supérieure (4) des panneaux (1, 2).

4. Combinaison selon la revendication 1, 2 ou 3, **caractérisée en ce que** la tête de vis (18) de la vis (17) pouvant être vissée dans le trou taraudé de la deuxième partie de ferrure (12), est réalisée polygonale, et **en ce que** la dimension de la paroi de délimitation (10), présentant la fente (11), de l'évidement (9), est plus grande, transversalement à l'axe de la vis, que la largeur de la tête de vis (18).

5. Combinaison selon l'une des revendications 1 à 4, **caractérisée en ce que** la première partie de ferrure (7) est disposée dans un renfoncement (6) de la face inférieure de l'un des panneaux (1).
